# EUROPEAN PATENT SPECIFICATION

(11) **EP 4 152 921 B1**
(45) Date of publication and mention of the grant of the patent: **10.07.2024**
(21) Application number: 21732602.4
(22) Date of filing: 21.05.2021
(51) Int. Cl.: A01K 61/60

(54) **FISH FARMING SYSTEM**
SYSTEM ZUR FISCHZUCHT
SYSTÈME D'ÉLEVAGE PISCICOLE

(30) Priority: 22.05.2020 NO 20200609; 26.06.2020 NO 20200755; 12.01.2021 NO 20210040
(43) Date of publication of application: 29.03.2023
(60) Divisional application: 24179027.8
(73) Proprietor: Aker Solutions AS, 1325 Lysaker (NO)
(72) Inventor: MOHN, Marthe Almeland, 1165 OSLO (NO); LINDSTAD, Pål, 1364 FORNEBU (NO); STRAND, Erik, 0273 OSLO (NO); MO, Frode, 0375 OSLO (NO); PAULSHUS, Bjørn, 2007 KJELLER (NO); ALMELAND, Inge Bertin, 1166 OSLO (NO); FREDBORG, Andreas Jo Falk, 1384 ASKER (NO); ERSDAL, Svein, 0674 OSLO (NO); JAKOBSEN, Kristoffer Kjellså, 0372 OSLO (NO); BRUUN, Per Kristian, 0464 OSLO (NO); BJERKNES, Ole Johan, 0786 OSLO (NO); HANNUS, Henrik, 1363 HØVIK (NO)
(74) Representative: Zacco Norway AS
(86) International application number: PCT/NO2021/050128
(87) International publication number: WO 2021/235944

(56) References cited:
- WO-A1-2016/166325
- WO-A1-2017/153417
- AU-A1- 2019 226 202
- CN-A- 110 140 683
- NO-A1- 20 141 378

## Description

The present invention relates to a fish farming system, and particularly to a semi-submersible offshore fish farming system.

### BACKGROUND

The recent years have seen a considerable growth in the fish farming industry in various countries, and it is projected that fish farming will continue to play a key role in the provision of food in the future. A continual focus on safety, fish welfare and the environmental impacts of fish farming, however, drives a demand for improved methods and solutions for fish farming. Various such improvements have been suggested over the recent years.

The use of fish farms to rear fish is widely known, and such farms are often used to rear large numbers of fish within an enclosure, thereby reducing strain and reliance on wild fish populations to satisfy consumer demand for fish products. Fish farms may be arranged offshore, such as in the sea or ocean, or in some cases a fish farm may be positioned in a river or in another body of water, e.g. in a natural lake, in an artificially created body of water, or in an inshore, nearshore or coastal location.

For conventional fish farming, there exists several types of fish pens, but one of the most common technologies used in fish farming is to use a floating flexible collar with a suspended net. The fish pens are often moored in a grid mooring system. A nearby feed barge may be used for providing the required support systems for the fish pens.

Due to the continuous increasing demand for sea food and the limited number sheltered locations suitable for fish farming, there is a need to develop new solutions that can, for example, be used outside these sheltered areas, where environmental influence may be more severe, or which provide advantages in relation to production efficiency, fish welfare, or other parameters.

Publications which may be useful to understand the field of technology include WO 2017/153417 A1. Other examples include NO 20141378 A1, AU 2019 226 202 A1, CN 110 140 683 A, and WO 2016/166325 A1.

The objective of the present invention is to provide systems which further improve on conventional solutions and techniques in the above or other areas.

### SUMMARY

The independent claim outlines a fish farming system according to the invention. The dependent claims and detailed description below describe various further embodiments and features.

### BRIEF DESCRIPTION OF THE DRAWINGS

These and other characteristics will become clear from the following description of illustrative embodiments, given as non-restrictive examples, with reference to the attached drawings, in which:
Fig. 1 shows a perspective view of a fish farming system.
Fig. 2 shows a cross-section of the fish farming system of Fig. 1.
Fig. 3 shows a perspective view of a fish farming system.
Fig. 4 shows a top view of the fish farming system of Fig. 3.
Fig. 5 shows a side view of the fish farming system of Fig. 3.
Fig. 6 shows a cross-sectional perspective view of the fish farming system of Fig. 3.
Fig. 7 shows a cross-sectional perspective view of another fish farming system.
Fig. 8 shows a schematic cross-sectional view of the fish farming system of Fig. 7.
Fig. 9 shows parts of the fish farming system of Fig. 6.
Fig. 10 shows details of a lower buoyancy member according to an embodiment.
Figs 11 and 12 illustrate parts of a floating collar according to an embodiment.
Figs 13-16 illustrate parts of a floating collar according to embodiments.
Figs 17 and 18 illustrate a double net having spacers.

### DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

Aspects of the present disclosure relate to a fish farming installation with a semi-submersible floating collar for a submersible fish pen. This installation may operate on two or more operational drafts such that the top of the net cage can be in a surface or near-surface position, or completely submerged. The top of the net cage can, for example, be submerged to a depth of 5-10 meters or more below the water surface, in order to reduce the exposure to, for example, sea lice, algae, and jellyfish and also reduce the environmental loads from ocean currents and waves or from impacts from floating objects. The installation may optionally be designed for deeper submergence to further reduce environmental loads.

The fish farming system may be designed with a favourable ratio between water line area and displacement to provide an effective construction for handling bending moments from waves and ocean currents, less movement of the floating collar during bad weather conditions, Since the effect of waves tends to be less in deeper water, less movement will be transferred from the floating collar to the net cage, which in turn reduces the change of damage to the net cage and escape of fish.

A semi-submersible fish-farming system, such as a fish pen, according to aspects described herein is operable between at least two different semi-submerged positions, a first position and a second position, by ballasting and de-ballasting. The system may comprise a rigid floating collar comprising a ring-shaped or polygonal lower buoyancy member, a ring-shaped or polygonal upper buoyancy member, a plurality of pillars connecting the buoyancy members, a net cage suspended from the floating collar and a net roof closing off the top of the net cage, the net cage with the net roof forming an enclosure for fish.

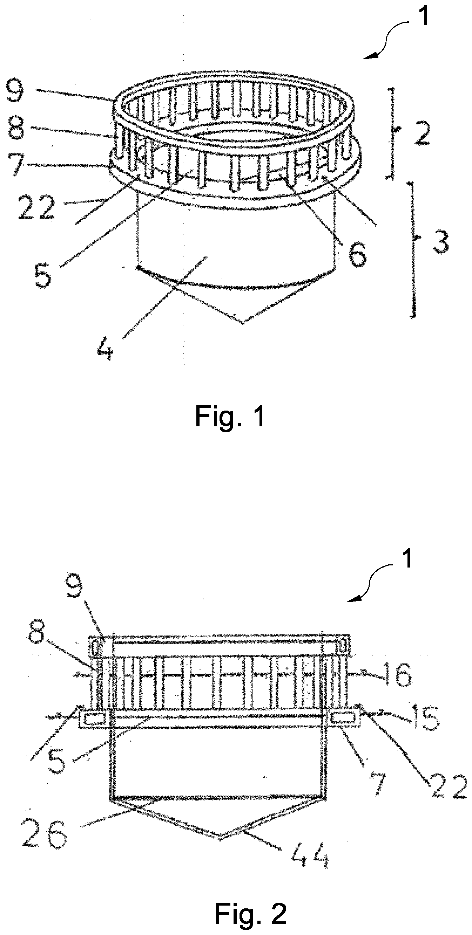

Fig. 1 is a principle drawing showing some elements of a fish farming system according to an aspect and Fig. 2 is a cross-section of the system shown in Fig. 1. In a preferred embodiment, the system comprises a fish pen 1 with a floating collar 2 comprising a lower buoyancy member 7, an upper buoyancy member 9 and a plurality of columns 8 which are mounted to the lower buoyancy member 7 and the upper buoyancy member 9. The columns 8 connect the lower and upper buoyancy members 7,9. The upper and lower buoyancy members 7,9 and columns 8 are preferably made of a rigid material, such as steel. For additional stiffness, for example to restrict torsion, bending or shear, tie struts or plates may be placed between some of the pillars. The upper and/or the lower buoyancy members 7,9 can, for example, have a circular or polygonal shape.

The lower buoyancy member 7 is a continuous, closed pontoon encircling the central portion of the fish pen 1 in which a net cage 3 is suspended, the net cage 3 forming an enclosure 3 for the fish and the net cage 3 being supported by the floating collar 2. The enclosure 3 is defined by sides 4 and a bottom 44, either or both of which can be flexible, such as a pliable net, or a stiff or semi-stiff construction. Further, the enclosure 3 has a closed roof 5, arranged to close a top section of the enclosure 3, thereby preventing fish from leaving the enclosure 3 and/or preventing predators from entering the enclosure 3. The roof 5 may be a net, grid, or other suitable arrangement. The roof 5 may be of the same material as the sides 4 and/or bottom 44. Even if phrased a "net" here, this does not preclude other types of materials used in the roof 5, sides 4 or bottom 44. These elements can be separate elements or an integrated construction. The enclosure 3 may also comprise a bottom ring 26, which may be temporarily or permanently installed and which can be pulled towards the surface using winches and wires or other mechanical means for example for fish crowding. The bottom ring 26 may also provide weight to keep the enclosure 3 in a desired form (e.g. keeping the sides 4 substantially vertical), and it may be arranged semi-stiff or stiff in order to assist keeping the shape and form of the enclosure 3 in the case of water currents or other loads.

The bottom ring 26 may be connected to an outer net, an inner net, or both an outer and an inner net defining the enclosure 3, described in further detail below. In such a case, the bottom ring 26 may be arranged to support either the outer net or the inner net, or both the outer net and the inner net.

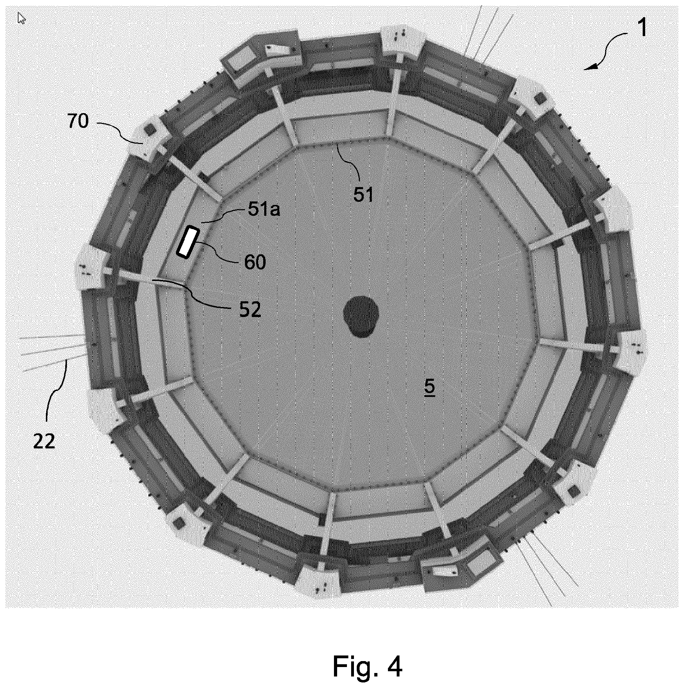

The lower buoyancy member 7 can, for example, have a circular, square, hexagonal octagonal or another design (for example such as that shown in Figure 4). The cross-section of the lower buoyancy member can for instance be circular, square or have another form. The interior of the lower buoyancy member 7 can, for example, be divided into one or more sections by means of partition walls. Further, the cross-section area and shape of the lower buoyancy member 7 does not need to be uniform. The upper buoyancy member 9 may have any of the above stated configurations and may also have a different design compared to the lower buoyancy member 7. The upper buoyancy member 9 and/or the lower buoyancy member 7 may be arranged with dedicated space for storage, operational equipment or the like. Such space may, for example, be in one or more partitioned sections in the structure.

The cross-section of the columns 8 can be circular, square or any other shape. Further, the columns 8 can each be identical or have different sizes and cross-sections. The distance between the columns 8 can be uniform or varying. The distance from a column 8 to the centre of the fish pen 1 can also be uniform or varying. The interior of at least some of the columns 8 is preferably in fluid communication with the interior of the lower buoyancy member 7. For trimming, water may be supplied or removed from the interior of the lower buoyancy member 7 and possible also the interior of some or all the columns 8. There may, optionally, be not multiple, but only one single column connecting the lower buoyancy member 7 and the upper buoyancy member 9.

The interior of one or more of the columns 8 may be may be arranged with dedicated space for storage, operational equipment or the like. One or more of the columns 8 can, for example, be divided into one or more sections by means of partition walls for this purpose. Such space may, for example, be in one or more partitioned sections in the structure.

To lower the fish pen 1 to an operational or submerged position 16, wherein the water line at the operational or submerged position 16 is indicated, water can be pumped into the interior of the lower buoyancy member 7 and possibly also into whole or parts of some or all of the columns 8, until the desired draft is achieved. The interior of the upper buoyancy member 9 and/or the columns 8 or parts thereof can, if desirable, be closed and filled with air or a foam material that provides buoyancy when the fish pen 1 is submerged. In this position, the roof 5 of the enclosure 3 can be kept at a certain depth to avoid or reduce the exposure to sea lice, jellyfish and algae. By submerging the enclosure 3, also the environmental impact of waves and currents can be reduced, since these impacts in general are more pronounced at or near the water surface and are reduced with increasing depth. By submerging the enclosure 3 a distance below the water surface, the movements transferred to the enclosure 3 from the collar 2 can also be reduced and the risk for damaging the enclosure 3 and escape of fish be reduced, due to less movement of the floating collar 2 and consequently less movement of the enclosure 3.

In order to raise the fish pen to a service position 15, wherein the water line at the service position 15 may be as indicated in Fig. 2, water can be pumped out of the lower buoyancy member 7 and/or the columns 8. The service position 15 may be a position wherein the lower buoyancy member 7 is at or near the water surface. In the service position 15, the floating collar 2 may then be floating with the lower buoyancy member 7 on the water surface such that the roof 5 of the enclosure 3 can be at or above the water surface. By removing the roof 5 (or parts thereof) of the enclosure 3 when the floating collar 2 is in service position 15, access to the enclosure 3 can be obtained for inspection, maintenance and different operations such as crowding and delousing. The upper buoyancy member 9 can function as support for travelling cranes, winches, personnel basket to facilitate operations in enclosure 3. All necessary tubes, hoses, cables etc. can be connected to the upper buoyancy member 9, led down the columns 8 to the lower buoyancy member 7 and out into the enclosure 3. Consequently, there is no need to take the enclosure 3 to surface for inspection or connection and the operation is not relying on divers/ROV.

The construction of the fish pen 1 may be so robust and strong that it is possible to utilize a direct-coupled mooring system 22 (see Figs 1-5) and it is not necessary to use a frame mooring, such as used for conventional systems with flexible plastic rings. This involves that each individual fish pen 1 can move independent of each other, if more fish pens 1 are placed in the same area, and the distance between each fish pen can be larger for increased safety and improved water quality.

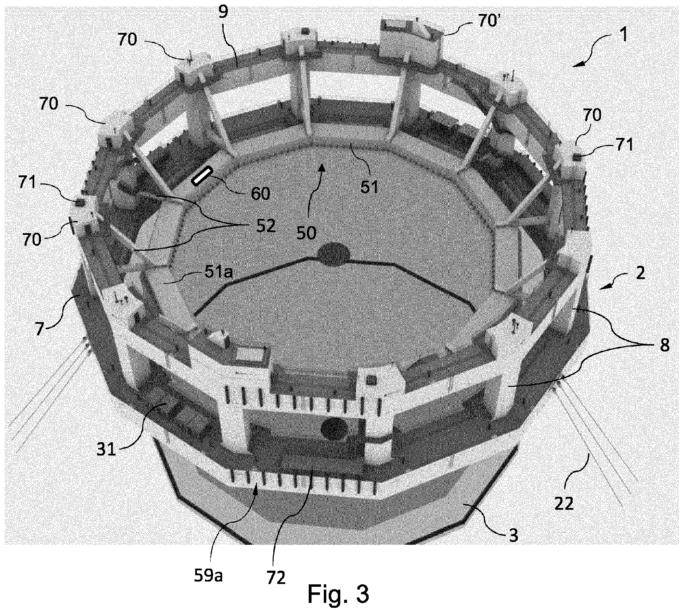

Illustrated in Figs 3-8 multiple embodiments with a similar structure are disclosed, also showing some preferable and/or optional implementations.

Referring to Figs 3-5, a fish farming system 1 comprises a ring- or polygonal shaped floating collar 2. Similarly as described above, the floating collar 2 may comprise a lower buoyancy member 7, an upper buoyancy member 9 and a plurality of pillars 8 interconnecting the upper and lower buoyancy members 7,9. Alternatively, the floating collar 2 may be made out of an integrated structure having other configurations.

An enclosure 3 for fish is suspended from and supported by the floating collar 2.

The system 1 further comprises an inner structure 50 fixed to and extending inwardly from the floating collar 2.

In this embodiment, the inner structure 50 is fixed to at least one of the upper buoyancy member 9 or one or more of the plurality of pillars 8. The inner structure 50 may, additionally, also be fixed to the lower buoyancy member 7.

The inner structure 50 comprises a ring- or polygonal shaped first inner structure part 51. In the shown embodiment, the first inner structure part 51 is supported by a plurality of second inner structure parts 52 extending between the first inner structure part 51 to the floating collar 2. The second inner structure parts 52 may extend from the first inner structure part 51 to one or more of the pillars 8, and/or to the upper buoyancy member 9. In the shown embodiment, the second inner structure parts 52 are angular members extending between the first inner structure part 51 and the pillars 8 and between the first inner structure part 51 to utility rooms 70 arranged on or as part of the upper buoyancy member 9. In another embodiment, the second inner structure parts 52 may extend between the first inner structure part 51 and any of the pillars 8, the utility rooms 70, the upper buoyancy member 9.

The roof 5 is fixed to the inner structure 50. Preferably, the roof 5 is arranged such as to be enclosed by the first inner structure part 51 and arranged to close an opening defined by the first inner structure part 51 as shown in Figs 3-4. More preferably, the inner structure 50 is submerged in an operational or submerged position 16 (shown in Fig 1). In this position, the roof 5 of the enclosure 3 can be kept at a certain depth to avoid or reduce the exposure to e.g. sea lice, jellyfish and algae. By submerging the enclosure 3, also the environmental impact of waves and currents is reduced, since these impacts in general are more pronounced at the water surface and are reduced with increasing depth.

The inner structure 50 may, optionally, comprise beams or another structure extending diagonally or substantially diagonally across the enclosure 3. This can be used as, for example, a gangway for inspection or work operations, supporting equipment such as feeding systems or measurement/monitoring equipment, and/or for supporting the roof 5.

The inner structure 50 comprises an opening 60,61 into the enclosure 3.

Advantageously, the opening 60,61 extends through the first inner structure part 51. As illustrated in Figs 3 and 4, the first inner structure part 51 may comprise a work deck 51a for an operator and an opening 60. The opening 60 may, for example, be a hatch arranged in the work deck 51a. The work deck 51a can be arranged to be non-submerged when the system 1 is in an upper draft position, such that operators can work on the work deck 51a. Advantageously, the opening 60,61 is arranged on the work deck 51a or is arranged such as to be accessible from the work deck 51a.

The opening 60,61 may, for example, allow an operator to access the enclosure 3 via the opening 60,61.

In any embodiment, the first inner structure part 51 may comprise a work deck 51a also without the opening 60 shown in Figs 3 and 4. This can allow an operator to access the enclosure 3 from above, for example via the area enclosed by the first inner structure part 51, and/or to access the roof 5.

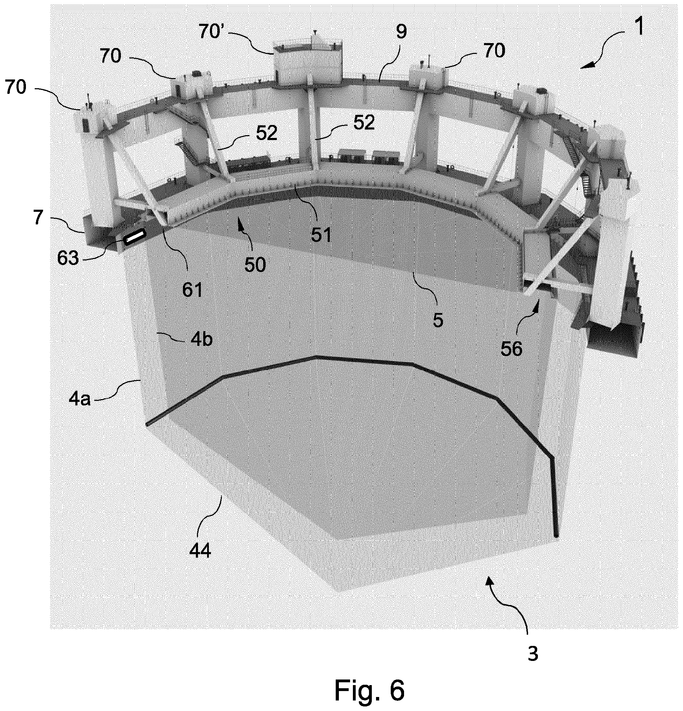

Alternatively, or additionally, the opening 60,61 may be accessible through a second inner structure part 52. Illustrated in Fig. 6, an opening 61 may for example allow access to the interior of the enclosure 3 from a utility room 70 on the floating collar 2. Advantageously, the second inner structure part 52 extends through the first inner structure part 51. The second inner structure part 52 may, for this purpose, be arranged hollow or with a feed-through channel or equivalent. There may, for example, be systems associated with feed distribution arranged in the upper buoyancy member 9 and/or the utility rooms 70. One or more feeding pipes may be provided from the utility rooms 70 (or alternatively from the pillars 8), via the second inner structure part 52, and into the enclosure 3. In this manner, direct access for feeding can be provided in a protected manner, and wherein feed can be provided more targeted to a desired region within the enclosure. The feeding pipes may be provided inside the inner structure part 52 or fixed partially or fully on the outside of the inner structure part 52. Advantageously, feed pipes are provided into the enclosure at multiple locations around the circumference of the floating collar, such that feeding can be carried out at multiple locations and/or feeding, for example, may be suspended at selected locations in case of strong water currents or other reasons.

Advantageously, a corresponding outlet can be provided at an outside of the floating collar 2, i.e. outside the outer net 4b. Such an outlet can be provided, for example, from one of the utility rooms 70, from an interior of the upper buoyancy member 9, a column 8 or from/via the lower buoyancy member 7. The outlet can, for example, be provided by means of a shaft, similar to the second inner structure part 52. Such an outlet can be used to launch equipment or tools to an outside of the floating collar 2, for example an inspection robot or a cleaning robot.

The second inner structure part 52 may, additionally or alternatively, be arranged hollow or with a feed-through channel or equivalent for introduction of tools or equipment therethrough. This may include tools or equipment needed for the operation of the fish farm system 1, such as inspection robots (e.g., an ROV), cleaning equipment (e.g. a net cleaner), or other items.

In any of the embodiments described or claimed herein, the second inner structure part 52 may advantageously be fixed to the columns 8, the upper buoyancy member 9 or the utility rooms 70 in a position which is above the waterline in all operational positions of the fish farm system 1.

One or more of the utility rooms 70 may have multiple internal storeys or be arranged higher than other utility rooms 70, as can be seen, for example, in Fig. 6. This can provide a higher freeboard on the particular utility room 70, for example in the case of work outside on the roof of the utility room 70 in question.

In any of the embodiments described or claimed herein, the utility rooms 70 may be arranged on the upper buoyancy member 9 and may be arranged to provide reserve buoyancy to the floating collar 2. In other words, the utility rooms 70 are not normally contributing to the buoyancy of the floating collar 2, but are dimensioned to provide reserve buoyancy, for example to meet regulatory requirements for such reserve buoyancy.

In any of the embodiments described or claimed herein, the first inner structure part 51 may be arranged such as to be fully above the waterline in a service position 15 of the fish farming system 1.

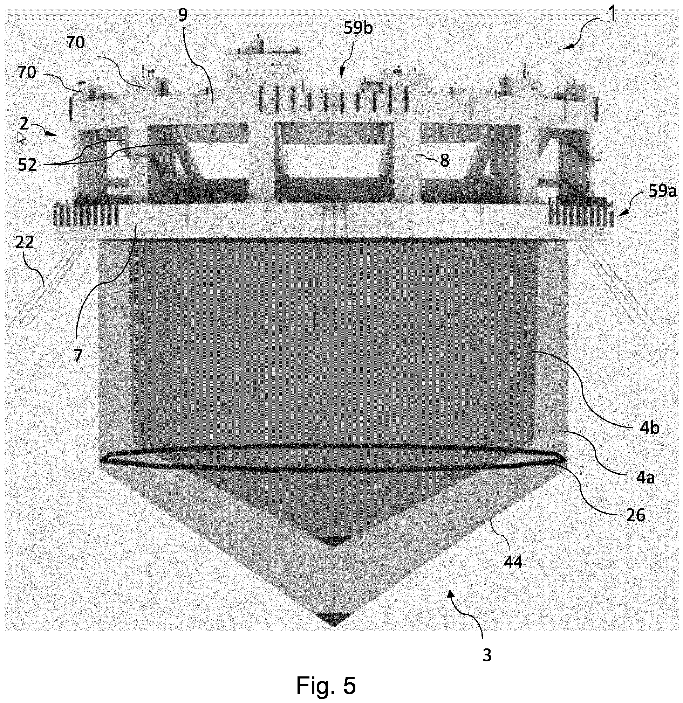

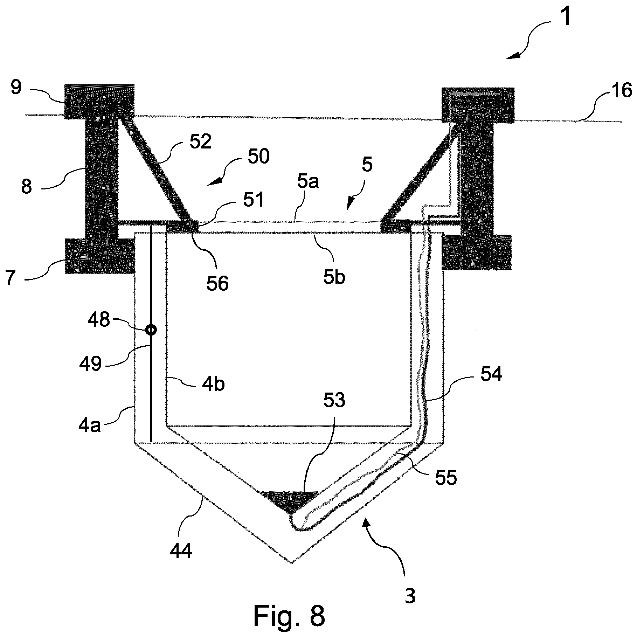

Now referring to Figs 5, 6, 7 and 8, the enclosure 3 may comprises a double net 4a,4b, wherein an outer net 4a is fixed to and suspended from the floating collar 2 and an inner net 4b is fixed to and suspended from the inner structure 50. Optionally, the outer net 4a can be suspended from the second inner structure parts 52 and the inner net 4b suspended from the first inner structure part 51. Advantageously, this can allow access between the inner and outer nets 4a,b, for example for inspection or maintenance. This access can be done in appropriate openings between the first inner structure part 51 and the floating collar 2. For example, such inspection may be carried out by means of a submersible camera or a remotely controlled vehicle. Optionally, other equipment such as lights or sensors may be permanently or semi-permanently installed in the annulus between the inner and outer nets 4a,b. This can be done by suspending the equipment in the annulus, or, optionally, by having a carrier arrangement permanently or semi-permanently installed in the annulus. Such a carrier arrangement, illustrated schematically in Fig. 8, may for example comprise a carrier 48 for holding the equipment, the carrier 48 being vertically movable along a wire or rod 49. The carrier arrangement may, alternatively or additionally, be arranged for horizontal movement within the annulus between the inner and outer nets 4a,b. For example, the carrier arrangement may be arranged on tracks which allow it to be moved about the inner net 4b.

A gap or an opening between the inner structure 50 and the floating collar 2 is provided at regular intervals about the outer circumference or outer sides of the inner structure 50.

Advantageously, a continuous gap or opening is arranged around the first inner structure part 51 and between the first inner structure part 51 and the floating collar 2.

Illustrated in Fig. 6, the lower buoyancy member 7 may comprise an opening 63 opening into an annulus or space between the inner and outer nets 4a,b. The opening 63 may, for example, be used for work operations or for launching tools or equipment into the annulus, such as inspection or cleaning tools.

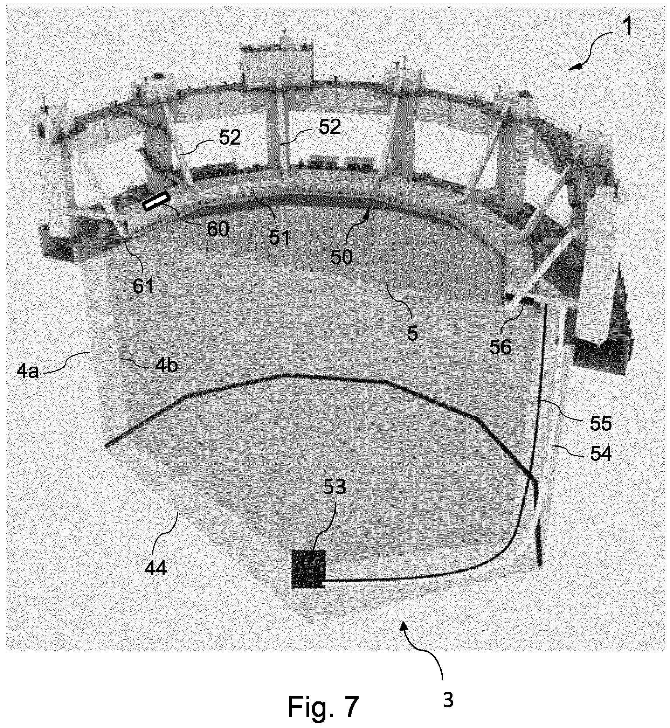

Optionally, as illustrated in Figs 7 and 8, the inner net 4b comprises a mort collector 53 connected to a mort collection pipe 54 arranged between the inner and outer nets 4a,b and extending from the mort collector 53 to the floating collar 2. The mort collector 53 may be a cone-shaped structure arranged at the bottom of the inner net 4b such as to collect faeces, dead fish, debris or other components. The mort collection pipe 54 may be arranged to receive anything collected by the collector 53. The mort collection pipe 54 may, for example, be connected to a pump for conveying the collected matter, or, as illustrated, an air lift system where an air hose 55 is provided to a lower part of the collection pipe 54. The air hose 55 may be arranged between the inner and outer nets 4a,b. Advantageously, this configuration provides protected positioning of the collection pipe 54 and, if applicable, the air hose 55, as well as the connection between the collection pipe 54 and the mort collector 53.

One or both the air hose 55 and collection pipe 54 may be fixed to either the inner or outer net 4a,b for support and for holding the pipe/hose in place. For example, one of the inner or outer nets 4a,b may have hooks or the like to which the pipe and/or hose is connected, or sewn-in pockets through which the pipe and/or hose extends.

In some embodiments, the fish farming system 1 may comprise equipment for handling dead fish. This may include an ensilage system for processing such dead fish collected from the enclosure 3. The equipment may also comprise, for example, testing equipment. When a dead fish is retrieved from the collector 53, it can be processed for example by counting parasites which may be on the fish, by carrying out other tests on the dead fish, by weighing or otherwise measuring the fish, etc. Data from such processing can be stored and, for example, provided to a shore location. This can provide better knowledge of the state of the fish in the enclosure 3. Equipment to carry out such operations may, for example, be arranged in one of the utility rooms 70.

Additionally or alternatively, a fish pumping arrangement may be arranged in the annulus between the inner and outer nets 4a,b. For example, crowding of fish may be done downwardly or to a side of the inner net 4b and towards an opening with a hose connected to it. The hose may be similar to the collection pipe 54, to collect and pump live fish, for example to a well boat or another fish pen. The opening may be at the bottom, similar to the mort collector 53, or at some other position on the inner net 4b. This may provide a more effective method to collect live fish from the enclosure 3, with enhanced safety.

An UPS system may be provided to enable a controlled shut-down in the case power supply to or on the fish farming system 1 is interrupted.

The inner structure 50 may comprise an air-filled dome 56 accessible from inside the enclosure 3. This allows fish, such as salmon, access to air to trim its swim bladder also when the system 1 is submerged. Compressed air lines may be provided to the air-filled dome 56, for example arranged inside or outside the second inner structure parts 52, and connected to a compressor in a utility room 70 or arranged elsewhere on the floating collar 2.

The air-filled dome 56 may be arranged to be above the waterline in the service position 15. In this manner, access to the air-filled dome 56 can be arranged for cleaning or other purposes.

Alternatively, or additionally, the inner structure 50 may comprise one or more openings, for example hatches, through which access to the air-filled dome 56 can be obtained. Illustrated in Fig. 28, a hatch 66 may be provided in a wall of the first inner structure part 51 which defines the air-filled dome 56. The hatch 66 may be provided in a vertical section of the wall of the first inner structure part 51. The hatch 66 may be provided at a vertical elevation which is below a design water level 67 which defines the target water level in the dome 56 during normal operation. This water level may be arranged such that the vertical walls of the first inner structure part 51 which define the dome 56 extend farther down than the target water level in order to prevent wash-out of the air in the dome 56. By providing the hatch 66 below the target water level 67 one can reduce the risk of air leakage from the dome 56 during operation. In the de-ballasted / service position 15, the hatch 66 can be arranged to be above the waterline, along with the rest of the first inner structure part 51, such that access to the interior of the dome 56 can be obtained through the hatch 66.

As can be seen in e.g. Figs 7 and 8, the inner net 4b can be arranged radially outwardly from the air-filled dome 56 and the opening 60, 61, such that the air dome 56 and the opening 60, 61 face the interior volume of the enclosure 3.

This may, for example, be used for access during inspections, for example with a submersible camera or a remotely operated vehicle which can be introduced into the enclosure 3 via the opening 60, 61.

In any of the embodiments described or claimed herein, the upper buoyancy member 9 may be provided with an internal gangway or other type of communication path for an operator along at least a part of its length. The internal gangway may, for example, be provided between at least two of the utility rooms 70 and/or at least two of the columns 8, whereby an operator can access the internal space of the utility rooms 70 and/or the columns 8 from the internal gangway.

In any of the embodiments described or claimed herein, the fish farming system 1 may comprise one or more equipment modules 31 (see Fig. 3) fixed on the lower buoyancy member 7. The equipment modules 31 may advantageously be fixed on the lower buoyancy member 7 such that in an operational position 16 (see Fig. 2) the equipment modules 31 are submerged, while in a service position 15, the equipment modules 31 are above the waterline. The equipment modules 31 may, for example, be positioned on an upward-facing surface of the lower buoyancy member 7, as illustrated.

The equipment modules 31 may, for example, be arranged as water-tight containers which can house operational equipment for the fish farming system 1. Advantageously, the equipment modules 31 may house batteries.

By arranging equipment modules 31 on the lower buoyancy member 7, one can obtain improved cooling, for example passive cooling or direct access to sea water for active cooling, when the fish farming system 1 is in its operational draft, while securing easy access to the equipment modules 31 when the fish farming system 1 is in its service draft.

In any of the embodiments described or claimed herein, the operational position 16 may be such that the upper buoyancy member 9 is in contact with the water such as to provide buoyancy. Alternatively, the upper buoyancy member 9 may be above the waterline when in the operational position 16, as indicated in Fig. 2. In this case, the regular buoyancy for the fish farming system 1 is provided by the lower buoyancy member 7 and the columns 8. Optionally, the fish farming system 1 may be provided with more than two draft positions, whereby the fish farming system 1 can be selectively operated in a service position 15, in a first operational position 16 wherein the upper buoyancy member 9 is above the waterline, and a second operational position wherein the upper buoyancy member 9 is in contact with the waterline. This may add operational flexibility to the system, in that a suitable draft can be used according to the type of operation carried out, for example in order that the motion of the fish farming system structure in the water is suitable. This may be, for example, if carrying out an operation on the structure itself or on the fish, when mooring a ship or boat to the fish farming system 1, or for other reasons during conditions when full submergence is not required.

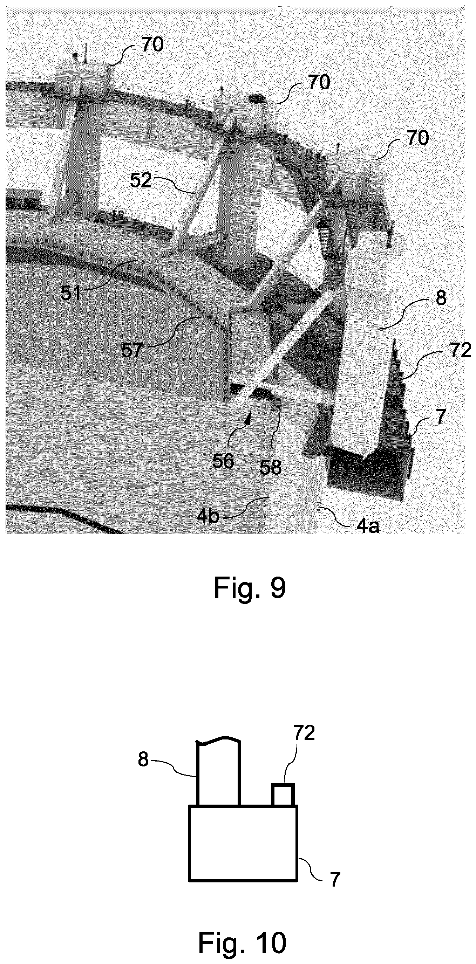

Illustrated in Fig. 9, in any of the embodiments described or claimed herein, the first inner structure part 51 may have an inner flange 57, an outer flange 58, or both an inner and an outer flange 57,58. The inner and/or the outer flange 57,58 may be arranged as a gangway or accessway so as to provide a work platform for an operator. This work platform may be used, for example, for inspections of the roof 5, the net 4a,b, the annulus between an inner and outer net 4a,b (if a double net is used), structural parts of the fish farm system 1, or other things. The gangway/accessway may also be used for inspecting the fish volume in the enclosure 3, or as a platform to carry out operations towards this volume. For this purpose, the gangway/accessway may have a fixation arrangement for tools or equipment, for example to allow tools/equipment to be temporarily fixed to the gangway/accessway while carrying out operations. There may, for example, be equipment or tool holders on or under the flange 57 or 58.

Parts of the inner structure 50, for example flange 57 or 58, can be used as support and/or hang-off for permanent and temporary equipment inside or outside the enclosure 3.

The roof 5 may be fixed to the inner flange 57, or optionally to other parts of the inner structure 50.

In any of the embodiments herein, the roof 5 can be a double net 5a,5b as illustrated in Fig. 8. The individual nets 5a,5b of the double net roof net are preferably attached at two elevations on the inner structure 50, as illustrated.

The net, or the inner net 4b, may be suspended from the outer flange 58.

Advantageously, the fish farming system 1 is designed such that the inner and/or outer flange 57,58 are above the waterline when the fish farming system is in the service position 15.

The first inner structure part 51 may also comprise a storage space for equipment, for example for wet storage of equipment. This will described in further detail below.

Illustrated in among other Fig. 5, the fish farming system 1 may have a boat access 59a,b at an outer periphery of the floating collar 2. Each boat access 59a,b may be fendered or otherwise prepared for service vessels, transport vessels or other types of vessels to dock at the floating collar 2. An upper boat access 59b may be provided at the upper buoyancy member 9, suitable for use in the operational position 16. A lower boat access 59a may be provided at the lower buoyancy member 7, suitable for use in the service position 15.

As is visible in among other Figs 6 and 9, the outer net 4a may be suspended from an inner periphery of the lower buoyancy member 7. Optionally, the outer net 4a may be suspended from an underside of the lower buoyancy member 7, or from an outer periphery of the lower buoyancy member 7. This may, for example, be desirable to obtain a larger distance between the inner and outer nets 4a,b.

Illustrated in Fig. 3, in any of the embodiments described or claimed herein, the utility room or rooms 70 may comprise a top opening 71. The top opening 71 may have a hatch or equivalent for selectively providing access into the respective utility room 70. The top opening 71 may be utilised for example to provide supplies, such as fish feed, fuel, or other necessities for the operation of the fish farming system 1.

Advantageously, the utility room or rooms 70 and/or the upper buoyancy member 9 may be arranged for receiving a container or equivalent landed onto the utility room 70 or upper buoyancy member 9. The container may carry equipment, for example a net for crowding, testing equipment, fish treatment equipment, or other items required for the operation of the fish farming unit 1 but which do not need to be permanently available.

The utility room or rooms 70 may comprise a top opening 71 and be arranged for a container or equivalent to be landed on the top opening 71. For example, by landing a container with an opening or a hatch at its bottom, direct access into the utility room 70 can be provided through the top opening 71 from inside the container after it has been landed on top of the utility room 70.

Alternatively, the top opening 71 may be arranged on the upper buoyancy member 9, equivalently.

A guiding structure (not shown) may be arranged on the upper buoyancy member 9 and/or the utility room or rooms 70 for guiding a container or equivalent which is to be landed thereon.

The utility room or rooms 70 may, additionally or alternatively, be arranged for landing personnel thereon. For example, a vessel with a heave compensated gangway can be used to land on the roof or top of the utility room 70 and a door or opening (which can be the top hatch) can be used for personnel to move inside the utility room 70. In this manner, safer landing of personnel can be achieved in that the utility room 70 may have a higher freeboard than other parts of the collar 2.

In any of the embodiments described or claimed herein, the columns 8 may be arranged on the lower buoyancy member 7 in a position which is shifted radially inwardly compared to a mid-point on the lower buoyancy member 7. (The term "radial" should be understood as a line extending from the horizontal centre point of the floating collar 2, even if the collar is polygonal and not circular.) Fig. 8 illustrates an embodiment in which the columns 8 are positioned approximately at a mid-point on the lower buoyancy member 7. Alternatively, as can be seen for example in Fig. 9, the columns 8 may be shifted inwardly so to be positioned closer to the enclosure 3. This may provide structural advantages and improved functionality for the fish farming system 1.

In any of the embodiments described or claimed herein, the columns 8 may be angled inwardly or outwardly. In other words, they do not necessarily need to be arranged vertically. This may be the case if, for example, the upper and lower buoyancy members 7,9 have different diameter, or if the placement of the columns 8 on the buoyancy members 7,9 otherwise dictate an angled orientation of the columns 8.

Illustrated in Figs 3, 9 and 10, in any of the embodiments described or claimed herein the lower buoyancy member 7 may have an elevated deck 72 for an operator. The elevated deck 72 may be arranged in conjunction with the boat access 59a on the lower buoyancy member 7. The elevated deck 72 may be provided for an operator to walk or move from a boat or ship docked at the floating collar 2, and/or for an operator to carry out manual operations such as operating the fish farm system 1, carrying out maintenance, or other required tasks. By providing an elevated deck 72, a required freeboard may be provided between the waterline and the deck at which the operator is present, for example in order to ensure appropriate safety of the operator. Providing an elevated deck 72 may avoid the need to de-ballast the floating collar 2 to a position at which the upper surface of the lower buoyancy member 7 itself has the required freeboard or height above the waterline, as that may not be necessary from an operational point of view.

In any of the embodiments described or claimed herein, the floating collar 2 may be substantially polygonal, having, for example, more than 6 sides, 8 sides, 10 sides, 12 sides, 16 sides, or more than 16 sides. A floating collar 2 according to embodiments described here may, for example, allow for efficient manufacturing and assembly. During construction, individual parts, such as each column 8, may share a common geometry, providing efficient manufacturing and assembly processes.

Advantageously, a horizontal cross-section of at least one of the columns 8 may have a polygonal shape. The polygonal shape may have four, five, six, or more than six sides.

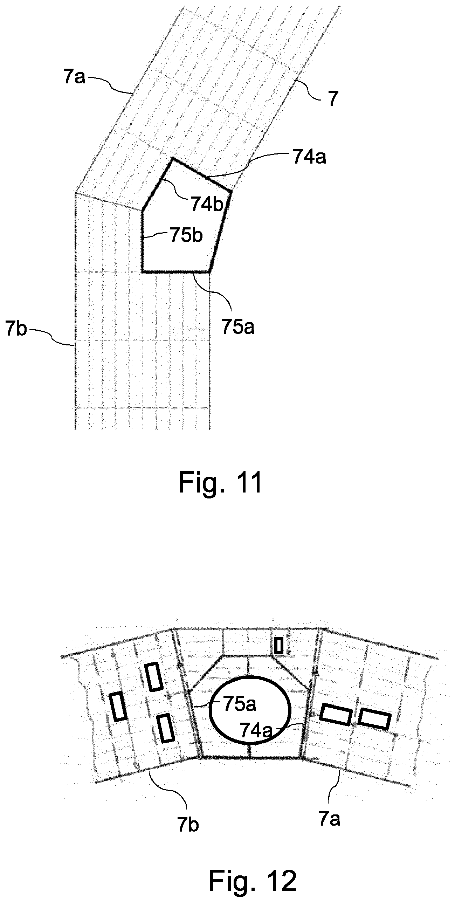

Illustrated in Figs 11 and 12, the column 8 may be positioned at the intersection of two parts 7a,7b making up the polygonal lower buoyancy member 7.

The polygonal shape of the column 8 may comprise at least one side 74a which is perpendicular to a longitudinal direction of the first part 7a.

Alternatively, or in addition, the polygonal shape of the column 8 may comprise at least one side 74b which is parallel with a longitudinal direction of the first part 7a.

Alternatively, or in addition, the polygonal shape of the column 8 may comprise at least one side 75a which is perpendicular to a longitudinal direction of the second part 7b.

Alternatively, or in addition, the polygonal shape of the column 8 may comprise at least one side 75b which is parallel with a longitudinal direction of the second part 7b.

By providing the column 8 as a polygonal structure with at least one side perpendicular to or parallel with the longitudinal direction of the lower buoyancy member 7 provides structural advantages in the interconnection between the column 8 and the lower buoyancy member 7. For example, the parts 7a,b can be provided with strengthening members extending longitudinally and/or transversely on the inside of the lower buoyancy member 7. Providing sides of the column 8 which align with the strengthening members can provide enhanced structural stability and avoid local regions of high stress concentration in the interface between the column 8 and the lower buoyancy member 7.

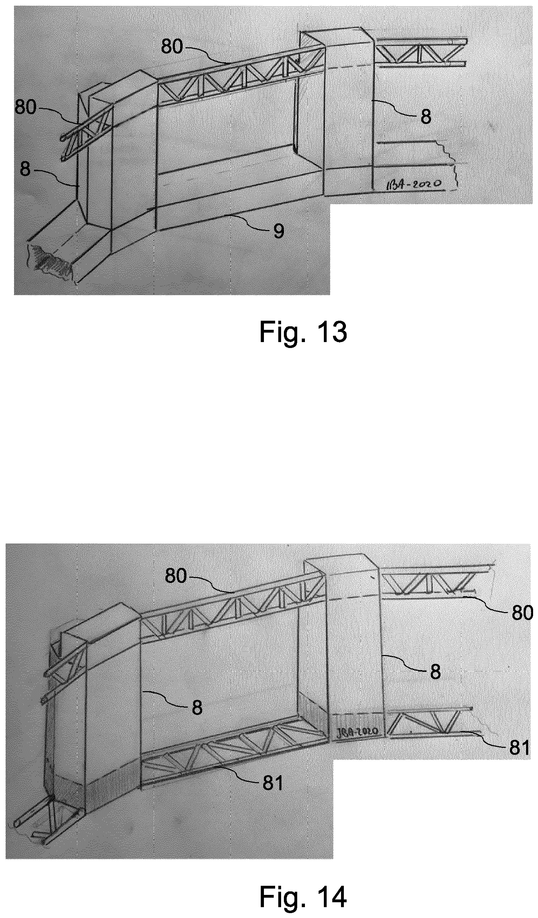

Illustrated in Figs 13-16, in any of the embodiments described or claimed herein, the upper buoyancy member 7, the lower buoyancy member 9, or both the upper and lower buoyancy members 7,9 may be entirely or partially replaced by a truss structure.

As illustrated in Fig. 13, the upper buoyancy member 7 may be replaced by an upper truss structure 80, which may extend between upper parts of the columns 8.

Optionally, or additionally, as illustrated in Fig. 14, the lower buoyancy module 9 may be replaced by a lower truss structure 81. Figs 13 and 14 illustrate the truss structures 80,81 as being a predominantly flat, two-dimensional structure, however other designs may also be suitable, such as a truss structure also having a depth / a more three-dimensional, elongate structure. Either of the truss structures 80,81 may be arranged upright (as truss structure 80) or horizontal (as truss structure 81), according to any particular design requirements.

Advantageously, in any of these embodiments, the lower truss structure 81 may be arranged so as to be positioned above the water surface in the service position 15 of the floating collar 2. In such a case, the lower truss structure 81 may, for example, be available for inspection when in the service position 15.

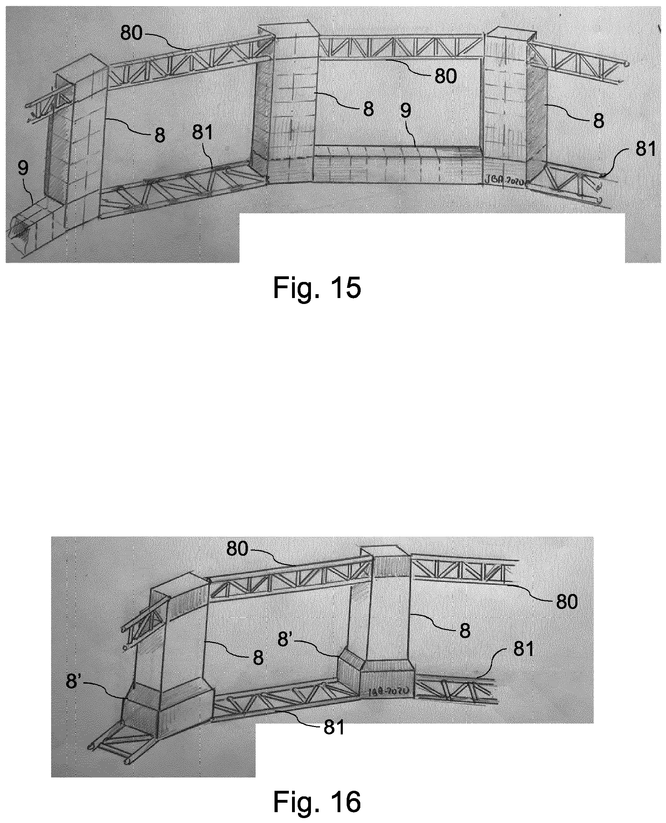

Illustrated in Fig. 15, the floating collar 2 may also comprise a combination of truss structure 81 and lower buoyancy module 9, for example alternately or with a portion of the floating collar 2 being made up of a truss structure 81 and part of the floating collar 2 being made up of a truss structure 81. The same may be the case for the upper buoyancy module 7 and upper truss structure 80, as appropriate.

Illustrated in Fig. 16, the shape of the columns 8 may be adapted to the overall design, for example the columns 8 may comprise an increased volume 8' at a lower part thereof in order to provide additional buoyancy, if required.

Optionally, the columns 8 may be arranged as a truss structure, or some of the columns 8 may be arranged as a truss structure. In this manner, some (or all) columns 8 may be arranged to provide structural support but not significantly contribute buoyancy to the collar 2.

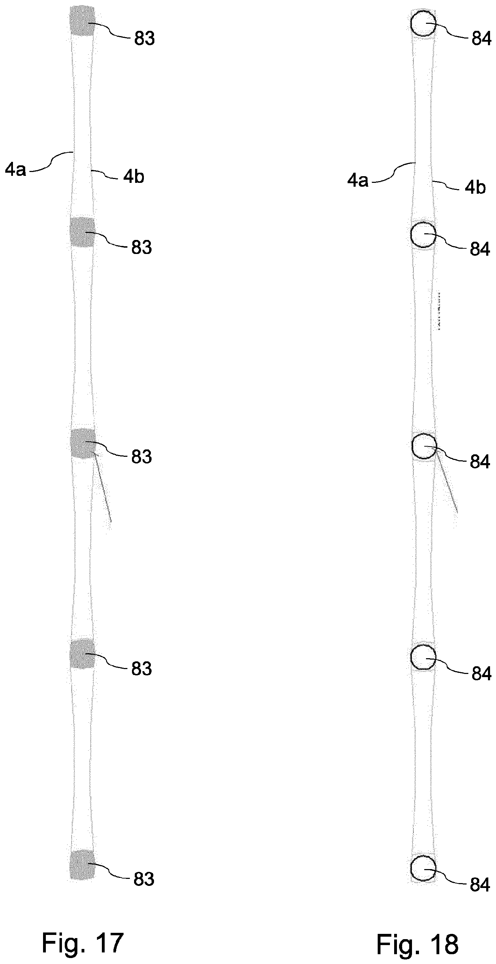

In any of the embodiments described or claimed herein, if using a double net 4a,b, the fish farming system 1 may be provided with spacers 83,84 provided between the inner net 4b and the outer net 4a. This is illustrated in Figs 17 and 18. In Fig. 17, spacers 83 are provided between the inner and outer nets 4a,b, wherein the spacers 83 are made up of an elongate, pliable water-tight container filled with liquid. The container may advantageously be filled with sea water. Due to the water-tight structure, the container may have enhanced stiffness (even if not completely rigid), such as to provide stability and support to the nets 4a,b. Being positioned between the nets 4a,b, the container prevents the nets 4a,b from contacting each other, for example due to water currents, which may otherwise have led to increased wear and potential damage. The spacers 83 may be fixed to one or both of the nets 4a,b, form a part of one of the nets 4a,b (e.g. be sown into the net), or simply be positioned between the nets 4a,b without being fixed to either of them.

In Fig. 18, the spacers 84 are provided by flexible or rigid pipes arranged between the nets 4a,b, for example PE pipes. The pipes may be positioned in holders in one of the nets 4a,b, for example sewn-in pockets in the nets 4a,b. Optionally, the spacers may simply be positioned between the nets 4a,b without being fixed to either of them.

Advantageously, the spacers 83,84 are suspended between the nets from the collar 2, between the lower buoyancy member 7 or from the first or second inner structure parts 51,52.

The spacers 83,84 may extend predominantly vertically between the nets 4a,b, they may be arranged predominantly horizontally between the nets 4a,b, or arranged in another shape or pattern, as appropriate.

## Claims

1. Fish farming system (1) comprising:
a ring- or polygonal shaped, semi-submersible floating collar (2) being operable between at least two different semi-submerged positions by ballasting and de-ballasting,
a submersible enclosure (3) for fish, the enclosure (3) suspended from and supported by the floating collar (2),
an inner structure (50) fixed to and extending inwardly from the floating collar (2), the inner structure (50) comprising a ring- or polygonal shaped inner structure part (51),
a roof (5) arranged to close a top section of the enclosure (3), and
a gap or an opening provided between the inner structure (50) and the floating collar (2) at regular intervals about an outer circumference or outer sides of the inner structure (50), or as a continuous gap or opening between the inner structure part (51) and the floating collar (2),
**characterised in that**
the enclosure comprises a net (4b) fixed to and suspended from the inner structure (50),
the roof (5) is fixed to the inner structure (50) and arranged enclosed by the inner structure part (51) and arranged to close a first opening defined by the inner structure part (51),
and
the inner structure (50) comprises a second opening (60,61) into the enclosure (3).

2. The fish farming system (1) of claim 1, wherein the floating collar (2) comprises a lower buoyancy member (7), an upper buoyancy member (9) and a plurality of pillars (8) interconnecting the upper and lower buoyancy members (7,9).

3. The fish farming system (1) of claim 2, wherein the inner structure (50) is fixed to at least one of the upper buoyancy member (9) or one or more of the plurality of pillars (8).

4. The fish farming system (1) of any preceding claim, wherein the inner structure part (51) is a first inner structure part (51), and the first inner structure part (51) is supported by a plurality of second inner structure parts (52) extending between the first inner structure part (51) to the floating collar (2).

5. The fish farming system (1) of claim 4, wherein the plurality of second inner structure parts (52) extend from the first inner structure part (51) to the upper buoyancy member (9) and/or to the plurality of pillars (8).

6. The fish farming system (1) of any preceding claim, wherein the enclosure (3) comprises a double net (4a,4b), wherein an outer net (4a) is fixed to and suspended from the floating collar (2) and the net (4b) is an inner net (4b) fixed to and suspended from the inner structure (50).

7. The fish farming system (1) of claim 6, wherein the inner net (4b) comprises a mort collector (53) connected to a mort collection pipe (54) arranged between the inner and outer nets (4a,b) and extending from the mort collector (53) to the floating collar (2).

8. The fish farming system (1) of any preceding claim, wherein the inner structure (50) comprises an air-filled dome (56) accessible from inside the enclosure (3).

9. The fish farming system (1) of any preceding claim, wherein the second opening (60,61) extends through the inner structure part (51).

10. The fish farming system (1) of any preceding claim, wherein the inner structure part (51) comprises a work deck (51a) for an operator.

11. The fish farming system (1) of claim 10, wherein the second opening (60,61) is arranged on the work deck (51a) or is arranged such as to be accessible from the work deck (51a).

12. The fish farming system (1) of claim 4 or 5, wherein the second opening (60,61) is accessible through the second inner structure part (52).

## Patentansprüche

1. Fischzuchtsystem (1), umfassend:
einen ringförmigen oder polygonal geformten halbtauchfähigen Schwimmkragen (2), der durch Ballastieren oder Entballastieren zwischen mindestens zwei verschiedenen halbgetauchten Positionen betreibbar ist,
ein Tauchgehege (3) für Fische, wobei das Gehege (3) an dem Schwimmkragen (2) aufgehängt ist und von diesem gestützt wird,
eine innere Struktur (50), die an dem Schwimmkragen (2) befestigt ist und sich von diesem aus nach innen erstreckt, wobei die innere Struktur (50) einen ringförmigen oder polygonal geformten inneren Strukturteil (51) umfasst,
ein Dach (5), das dazu angeordnet ist, einen oberen Abschnitt des Geheges (3) zu schließen, und
eine Lücke oder eine Öffnung, die zwischen der inneren Struktur (50) und dem Schwimmkragen (2) in regelmäßigen Abständen um einen äußeren Umfang oder Außenseiten der inneren Struktur (50) oder als eine durchgehende Lücke oder Öffnung zwischen dem inneren Strukturteil (51) und dem Schwimmkragen (2) bereitgestellt ist,
**dadurch gekennzeichnet, dass**
das Gehege ein Netz (4b), das an der innere Struktur (50) befestigt und daran aufgehängt ist, umfasst,
das Dach (5) an der inneren Struktur (50) befestigt ist und von dem inneren Strukturteil (51) eingefasst angeordnet ist und dazu angeordnet ist, eine erste Öffnung, die von dem inneren Strukturteil (51) definiert wird, zu schließen,
und
die innere Struktur (50) eine zweite Öffnung (60, 61) in das Gehege (3) umfasst.

2. Fischzuchtsystem (1) nach Anspruch 1, wobei der Schwimmkragen (2) ein unteres Auftriebselement (7), ein oberes Auftriebselement (9) und eine Vielzahl von Säulen (8), die das untere und das obere Auftriebselement (7, 9) miteinander verbinden, umfasst.

3. Fischzuchtsystem (1) nach Anspruch 2, wobei die innere Struktur (50) an mindestens einem des oberen Auftriebselements (9) oder einer oder mehreren der Vielzahl von Säulen (8) befestigt ist.

4. Fischzuchtsystem (1) nach einem der vorhergehenden Ansprüche, wobei der innere Strukturteil (51) ein erster innerer Strukturteil (51) ist und der erste innere Strukturteil (51) von einer Vielzahl von zweiten inneren Strukturteilen (52), die sich zwischen dem ersten inneren Strukturteil (51) zu dem Schwimmkragen (2) erstreckt, gestützt wird.

5. Fischzuchtsystem (1) nach Anspruch 4, wobei die Vielzahl von zweiten inneren Strukturteilen (52) sich von dem ersten inneren Strukturteil (51) zu dem oberen Auftriebselement (9) und/oder der Vielzahl von Säulen (8) erstreckt.

6. Fischzuchtsystem (1) nach einem der vorhergehenden Ansprüche, wobei das Gehege (3) ein Doppelnetz (4a, 4b) umfasst, wobei ein äußeres Netz (4a) an dem Schwimmkragen (2) befestigt und an diesem aufgehängt ist und das Netz (4b) ein inneres Netz (4b) ist, das an der inneren Struktur (50) befestigt und aufgehängt ist.

7. Fischzuchtsystem (1) nach Anspruch 6, wobei das innere Netz (4b) einen Kollektor (53) für tote Fische umfasst, der mit einem Kollektorrohr (54) für tote Fische, das zwischen dem inneren und dem äußeren Netz (4a, 4b) angeordnet ist und sich von dem Kollektor (53) für tote Fische zu dem Schwimmkragen (2) erstreckt, verbunden ist.

8. Fischzuchtsystem (1) nach einem der vorhergehenden Ansprüche, wobei die innere Struktur (50) eine Luftfilter-Kuppel (56), die von der Innenseite des Geheges (3) zugänglich ist, umfasst.

9. Fischzuchtsystem (1) nach einem der vorhergehenden Ansprüche, wobei die zweite Öffnung (60, 61) sich durch den inneren Strukturteil (51) erstreckt.

10. Fischzuchtsystem (1) nach einem der vorhergehenden Ansprüche, wobei der innere Strukturteil (51) ein Arbeitsdeck (51a) für einen Betreiber umfasst.

11. Fischzuchtsystem (1) nach Anspruch 10, wobei die zweite Öffnung (60, 61) auf dem Arbeitsdeck (51a) angeordnet ist oder so angeordnet ist, dass sie von dem Arbeitsdeck (51a) aus zugänglich ist.

12. Fischzuchtsystem (1) nach Anspruch 4 oder 5, wobei die zweite Öffnung (60, 61) durch den zweiten inneren Strukturteil (52) zugänglich ist.

## Revendications

1. Système d'élevage piscicole (1) comprenant :
un collier flottant semi-submersible (2) de forme annulaire ou polygonale pouvant fonctionner entre au moins deux positions semi-immergées différentes par ballastage et déballastage,
une enceinte submersible (3) pour poissons, l'enceinte (3) suspendue et supportée par le collier flottant (2),
une structure interne (50) fixée au collier flottant (2) et s'étendant vers l'intérieur à partir de celui-ci, la structure interne (50) comprenant une partie de structure interne de forme annulaire ou polygonale (51),
un toit (5) agencé pour fermer une section supérieure de l'enceinte (3), et
un espace ou une ouverture prévu entre la structure interne (50) et le collier flottant (2) à intervalles réguliers autour d'une circonférence externe ou de côtés externes de la structure interne (50), ou sous la forme d'un espace ou d'une ouverture continue entre la partie de structure interne (51) et le collier flottant (2),
**caractérisé en ce que**
l'enceinte comprend un filet (4b) fixé et suspendu à la structure interne (50),
le toit (5) est fixé à la structure interne (50) et agencé enfermé par la partie de structure interne (51) et agencé pour fermer une première ouverture définie par la partie de structure interne (51),
et
la structure interne (50) comprend une seconde ouverture (60, 61) dans l'enceinte (3).

2. Système d'élevage piscicole (1) selon la revendication 1, dans lequel le collier flottant (2) comprend un élément de flottabilité inférieur (7), un élément de flottabilité supérieur (9) et une pluralité de piliers (8) reliant les éléments de flottabilité supérieur et inférieur (7, 9) entre eux.

3. Système d'élevage piscicole (1) selon la revendication 2, dans lequel la structure interne (50) est fixée à au moins l'un parmi l'élément de flottabilité supérieur (9) ou un ou plusieurs de la pluralité de piliers (8).

4. Système d'élevage piscicole (1) selon une quelconque revendication précédente, dans lequel la partie de structure interne (51) est une première partie de structure interne (51), et la première partie de structure interne (51) est supportée par une pluralité de secondes parties de structure interne (52) s'étendant entre la première partie de structure interne (51) et le collier flottant (2).

5. Système d'élevage piscicole (1) selon la revendication 4, dans lequel la pluralité de secondes parties de structure interne (52) s'étendent à partir de la première partie de structure interne (51) jusqu'à l'élément de flottabilité supérieur (9) et/ou jusqu'à la pluralité de piliers (8).

6. Système d'élevage piscicole (1) selon une quelconque revendication précédente, dans lequel l'enceinte (3) comprend un double filet (4a, 4b), dans lequel un filet externe (4a) est fixé et suspendu au collier flottant (2) et le filet (4b) est un filet interne (4b) fixé et suspendu à la structure interne (50) .

7. Système d'élevage piscicole (1) selon la revendication 6, dans lequel le filet interne (4b) comprend un collecteur d'effluents (53) relié à un tuyau de collecte des effluents (54) disposé entre les filets interne et externe (4a, b) et s'étendant à partir du collecteur d'effluents (53) jusqu'au collier flottant (2).

8. Système d'élevage piscicole (1) selon une quelconque revendication précédente, dans lequel la structure interne (50) comprend un dôme rempli d'air (56) accessible depuis l'intérieur de l'enceinte (3).

9. Système d'élevage piscicole (1) selon une quelconque revendication précédente, dans lequel la seconde ouverture (60, 61) s'étend à travers la partie de structure interne (51).

10. Système d'élevage piscicole (1) selon une quelconque revendication précédente, dans lequel la partie de structure interne (51) comprend un pont de travail (51a) pour un opérateur.

11. Système d'élevage piscicole (1) selon la revendication 10, dans lequel la seconde ouverture (60, 61) est agencée sur le pont de travail (51a) ou est agencée de manière à être accessible depuis le pont de travail (51a).

12. Système d'élevage piscicole (1) selon la revendication 4 ou 5, dans lequel la seconde ouverture (60, 61) est accessible à travers la seconde partie de structure interne (52) .
